Europäisches Patentamt

European Patent Office

Office européen des brevets

(11) Veröffentlichungsnummer: **0 224 777**

**A2**

(12) **EUROPÄISCHE PATENTANMELDUNG**

(21) Anmeldenummer: 86115838.4

(22) Anmeldetag: 14.11.86

(51) Int. Cl.⁴: **B29C 67/14** ,
//(B29K105/04,B29L31:52)

(30) Priorität: 29.11.85 CH 5111/85

(43) Veröffentlichungstag der Anmeldung:
10.06.87 Patentblatt 87/24

(84) Benannte Vertragsstaaten:
AT BE CH DE ES FR GB IT LI SE

(71) Anmelder: Cellpack AG
Zentralstrasse 21
5610 Wohlen(CH)

(72) Erfinder: Wernli, Rolf
Rosenweg 7
CH-5610 Wohlen(CH)

(74) Vertreter: Blum, Rudolf Emil Ernst et al
c/o E. Blum & Co Patentanwälte Vorderberg
11
CH-8044 Zürich(CH)

(54) Verstärkungselement für Formteile aus Kunststoff, Kunststoffschaumteil mit Verstärkungselement und Ski mit Kunststoffschaumteil.

(57) Das Verstärkungselement besteht aus einem selbsttragenden Formkörper. Der Formkörper wird durch Wickeln oder Flechten von zwei Strängen hergestellt, die aus Fasern mit einer Kunststoffmatrix bestehen. Die Festigkeitseigenschaften des Formkörpers, insbesondere Biege-und Torsionsfestigkeit, können durch die Anordnung der Stränge zueinander beeinflusst werden.

Kunststoffschaumteile mit einem derartigen Verstärkungselement weisen neben den genannten Festigkeitseigenschaften auch ein geringes Gewicht auf, wodurch diese sich besonders zur Anwendung als Kern eines Skikörpers eignen.

*Fig. 3a*

## Verstärkungselement für Formteile aus Kunststoff, Kunststoffschaumteil mit Verstärkungselement und Ski mit Kunststoffschaumteil

Die vorliegende Erfindung betrifft ein Verstärkungselement für Formteile aus Kunststoff, einen Kunststoffschaumteil mit Verstärkungselement und Ski mit Kunststoffschaumteil.

Bekanntlich erlangen Formteile aus Kunststoff erst durch Verstärkung mit faserförmigen Materalien genügende Festigkeit.

Kunststoffschäume erlangen auch erst durch Verstärkung mit Verstärkungselementen die für viele Anwendungen nötigen Festigkeiten und Steifigkeiten. Werden die Schäume als Kernmaterial in Sandwichprodukten eingesetzt, so können nur durch-oder umschäumbare Verstärkungen gebraucht werden. Zweidimensionale Verstärkungen wie Drähte oder Gewebe sind bekannt. Speziell bei mit Torsionskräften belasteten Bauteilen sind aber geschlossene dreidimensionale Verstärkungselemente (Torsionskasten) nötig.

Ziel der Erfindung ist es, ein dreidimensionales Verstärkungselement zu schaffen, welches höchste Festigkeit und Steifikgkeit bei geringstem Gewicht aufweist sowie vom Schaum voll durch-und umschäumt wird.

Dieses Ziel wird erfindungsgemäss mit den im Kennzeichen des Patentanspruches I genannten Merkmalen erreicht.

Der mit der Erfindung erzielbare Vorteil ist darin zu sehen, dass der Formkörper aufgrund seiner Verformbarkeit als Halbfabrikat für verschiedene Formteile hergestellt werden kann.

Mit der Möglichkeit der Gitterelemente übereinanderliegend anzuordnen oder miteinander zu verflechten, können nahtlose Formkörper hergestellt werden.

Durch die Auslegung des Winkels, unter welchem sich die Gitterelemente schneiden, können die Festigkeitseigenschaften, insbesondere Biege- und Torsionsfestigkeit des Formkörpers, für den jeweiligen Zweck angepasst werden.

Ein Kunststoffschaumteil mit einem Verstärkungselement ist durch die Merkmale des Patentanspruches 9 gekennzeichnet.

Die Vorteile bestehen im wesentlichen darin, dass wegen des gitterartigen Verstärkungselementes sowohl mit Weichschaum als auch mit Hartschaum durch-und umschäumt werden kann.

Aufgrund der Verformbarkeit des Verstärkungselementes können Formteile, insbesondere Hohlkörper, geschäumt werden.

Ein Ski mit Kunststoffschaumteil ist durch die Merkmale des Patentanspruches I6 gekennzeichnet.

Im folgenden wird die Erfindung anhand der beiliegenden Zeichnungen erläutert.

Es zeigen:

Figur I eine räumliche Ansicht eines Ausführungsbeispiels eines Verstärkungselementes;

Figuren 2a und bräumliche Ansichten von Abschnitten weiterer Ausführungsbeispiele eines Verstärkungselementes; und

Figuren 3a und b räumliche Ansichten von Formteilen mit einem Verstärkungselement nach Figur I.

Bei dem in Figur I dargestellten Ausführungsbeispiel ist das Verstärkungselement rohrförmig ausgebildet.

Das Verstärkungselement ist gitterartig ausgebildet, wobei die Gitterelemente I, 2 als Stränge, bestehend aus Fasern mit einer Kunststoffmatrix ausgebildet sind. Die Stränge sind in zwei Lagen übereinanderliegend angeordnet.

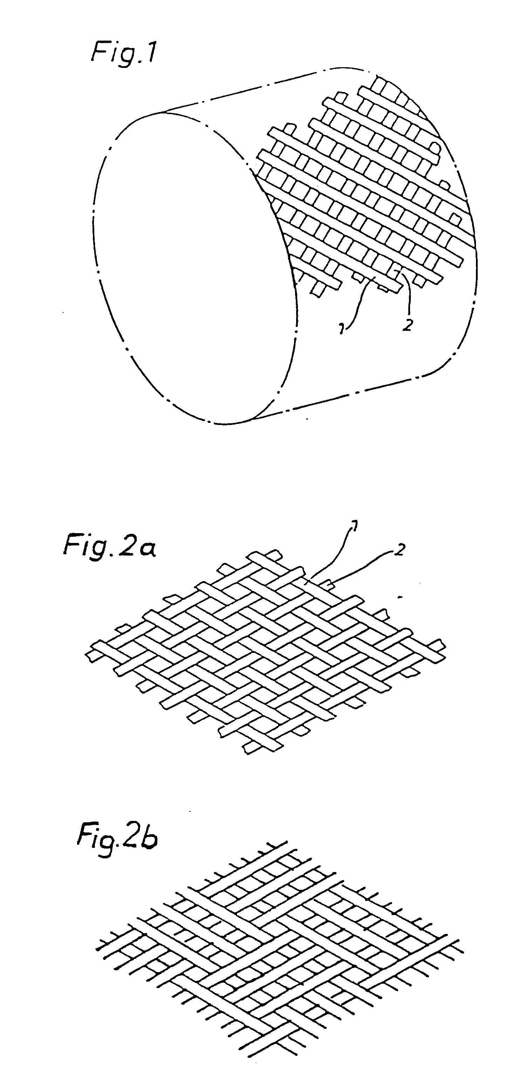

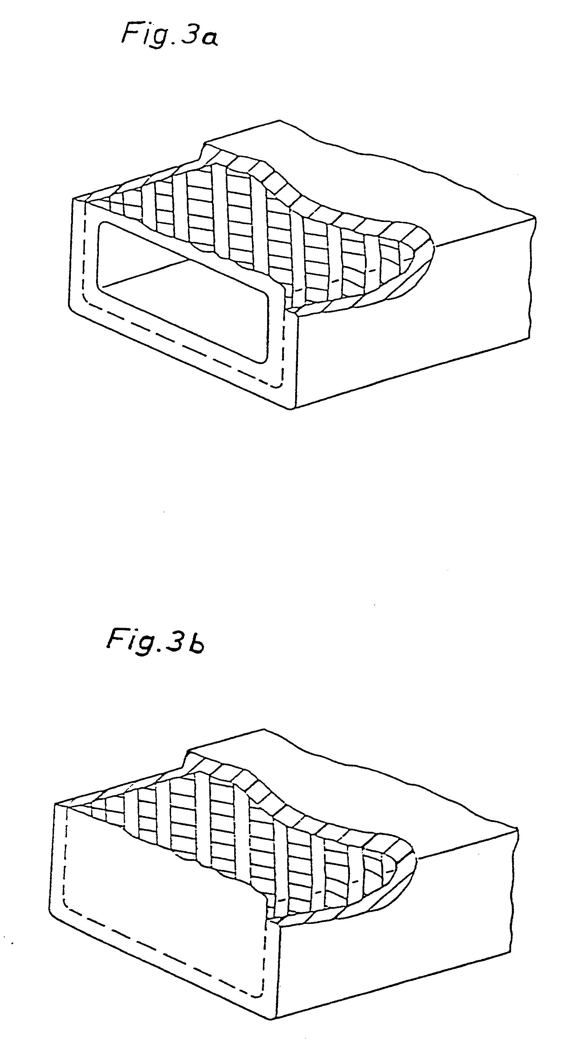

Neben dieser Anordnung können, wie Figuren 2a und 2b zeigen, die Stränge I,2 miteinander verflochten oder in Kombination übereinanderliegen und verflochten sein. Durch die vorstehend erwähnte Anordnung der Stränge, die an den Kreuzstellen durch die Matrix miteinander verbunden sind, entsteht ein selbsttragender Formkörper, der in vorteilhafter Weise durch mechanische und/oder thermische Einwirkung verformbar ist. Andererseits können durch Auswahl des Winkels, unter welchem sich die Stränge I,2 schneiden, und der Winkel, unter dem die Stränge I,2 bezüglich der Mittellinie angeordnet werden sowie die Dichte der Stränge, die Festigkeits-und Steifigkeitseigenschaften des Formkörpers, insbesondere dessen Torsionsfestigkeit und -steifigkeit, bestimmt werden.

In Figuren 3a und b sind zwei Formteile aus Schaumstoff mit einem Verstärkungselement nach Figur I dargestellt. Der Formteil gemäss Figur 3a ist ein Hohlkörper und der Formteil gemäss Figur 3b ist ein Vollkörper mit rechteckigem Querschnitt. Um einen solchen Körper herzustellen, wird der Formkörper durch Verformen dem Querschnitt des Körpers so angepasst, dass das Verstärkungselement, von Kunststoffschaum umschlossen ist. Ein derart ausgebildeter Formteil hat eine besondere Biege-und Torsionsfestigkeit und -steifigkeit und ein geringes Gewicht. Diese Eigenschaft des Formteils bildet die Voraussetzung für eine bevorzugte Anwendung des Formteiles als Skikörper bzw. als Kern eines Skikörpers.

**Ansprüche**

1. Verstärkungselement für Formteile aus Kunststoff, welches Verstärkungselement aus Fasern mit einer Kunststoffmatrix besteht, dadurch gekennzeichnet, dass aus den Fasern mit der Kunststoffmatrix bestehende Gitterelemente einen selbsttragenden, gitterartigen Formkörper bilden, der durch mechanische und/oder thermische Einwirkung verformbar ist.

2. Element nach Anspruch 1, dadurch gekennzeichnet, dass der Formkörper ein Hohlkörper mit gleichbleibendem oder sich verjüngenden Querschnitt ist.

3. Element nach Anspruch 1 oder 2, dadurch gekennzeichnet, dass die Gitterelemente in zwei Lagen übereinanderliegend angeordnet sind.

4. Element nach Anspruch 1 oder 2, dadurch gekennzeichnet, dass die Gitterelemente miteinander verflochten sind.

5. Element nach Anspruch 2 oder 3, dadurch gekennzeichnet, dass die Gitterelemente unter einem Winkel im Bereich von 0-90° zueinander angeordnet sind.

6. Element nach Anspruch 1, dadurch gekennzeichnet, dass die Fasern aus nichtmetallischem Material, insbesondere aus Polyamid, Glas und Carbon bestehen.

7. Element nach Anspruch 1, dadurch gekennzeichnet, dass die Matrix eine Duroplastmatrix, insbesondere aus Epoxid oder Polyesterharz ist.

8. Element nach Anspruch 7, dadurch gekennzeichnet, dass die Matrix eine Thermoplastmatrix, insbesondere Polypropylen, ABS ist.

9. Kunststoffschaumteil mit einem Verstärkungselement nach Anspruch 1, dadurch gekennzeichnet, dass das Element eine von Kunststoffschaum umschlossene Einlage bildet, um den Schaumteil zu versteifen.

10. Schaumteil nach Anspruch 9, dadurch gekenn zeichnet, dass der Kunststoffschaum ein Weich-oder Hartschaum, insbesondere Polyurethanschaum ist.

11. Schaumteil nach einem der Ansprüche 9-10, dadurch gekennzeichnet, dass er als Hohlkörper ausgebildet ist.

12. Schaumteil nach einem der Ansprüche 9-10, dadurch gekennzeichnet, dass er als Vollkörper ausgebildet ist.

13. Schaumteil nach einem der Ansprüche 9-12, dadurch gekennzeichnet, dass er eine rechteckige Querschnittsform aufweist.

14. Schaumteil nach einem der Ansprüche 9-13, dadurch gekennzeichnet, dass er über seine Länge die gleiche Querschnittsform hat.

15. Schaumteil nach einem der Ansprüche 9-13, dadurch gekennzeichnet, dass er über seine Länge eine ungleiche Querschnittsform hat.

16. Ski mit einem Kunststoffschaumteil nach Anspruch 9, dadurch gekennzeichnet, dass mindestens der Kern des Skikörpers aus dem Kunststoffschaumteil besteht.

*Fig.1*

*Fig.2a*

*Fig.2b*

Fig. 3a

Fig. 3b